# EUROPEAN PATENT SPECIFICATION

(11) **EP 2 506 493 B1**
(45) Date of publication and mention of the grant of the patent: **03.12.2014**
(21) Application number: 11761952.8
(22) Date of filing: 15.03.2011
(51) Int. Cl.: H04L 12/14, H04W 4/24, H04W 28/10

(54) **METHOD AND SYSTEM FOR CONTROLLING DATA FLOW OF SUBSCRIBER SERVICE**
VERFAHREN UND SYSTEM ZUR STEUERUNG DES DATENFLUSS IN EINEM TEILNEHMERDIENST
PROCÉDÉ ET SYSTÈME DE CONTRÔLE DE FLUX DE DONNÉES DE SERVICE D'ABONNÉ

(30) Priority: 31.03.2010 CN 201010142079
(43) Date of publication of application: 03.10.2012
(60) Divisional application: 14186972.7
(73) Proprietor: Huawei Technologies Co., Ltd., Shenzhen, Guangdong 518129 (CN)
(72) Inventor: CHAI, Xiaoqian, Shenzhen Guangdong 518129 (CN); GAO, Lei, Shenzhen Guangdong 518129 (CN); SHAN, Mingjun, Shenzhen Guangdong 518129 (CN); KANG, Jiao, Shenzhen Guangdong 518129 (CN)
(74) Representative: Thun, Clemens
(86) International application number: PCT/CN2011/071794
(87) International publication number: WO 2011/120378

(56) References cited:
- CN-A- 1 794 638
- CN-A- 101 431 420
- US-A1- 2009 168 660
- US-A1- 2010 010 922
- "3rd Generation Partnership Project; Technical Specification Group Services and System Aspects; Telecommunication management; Charging management; Charging architecture and principles (Release 9)", 3GPP STANDARD; 3GPP TS 32.240, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.0.0, 30 December 2009 (2009-12-30), pages 1-44, XP050401639, [retrieved on 2009-12-30]
- "3rd Generation Partnership Project; Technical Specification Group Service and System Aspects; Telecommunication management; Charging management; Online Charging System (OCS): Applications and interfaces (Release 9)", 3GPP STANDARD; 3GPP TS 32.296, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.1.0, 18 December 2009 (2009-12-18), pages 1-77, XP050401267, [retrieved on 2009-12-18]
- "3rd Generation Partnership Project; Technical Specification Group Service and System Aspects; Telecommunication management; Charging management; Diameter charging applications (Release 9)", 3GPP STANDARD; 3GPP TS 32.299, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.2.0, 18 December 2009 (2009-12-18), pages 1-145, XP050401271, [retrieved on 2009-12-18]
- HAKALA L MATTILA ERICSSON J-P KOSKINEN M STURA J LOUGHNEY NOKIA H: "Diameter Credit-Control Application; rfc4006.txt", 20050801, 1 August 2005 (2005-08-01), XP015041993, ISSN: 0000-0003
- ALCATEL-LUCENT: "The different alternatives to Key issue 3 in TR 23.813", 3GPP DRAFT; S2-101158_OCS-PCRF-ALTERNATIVES COMPARISON-V0.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 15 February 2010 (2010-02-15), XP050433628, [retrieved on 2010-02-15]
- OPENET: "Possible Flows on Sy", 3GPP DRAFT; S2-101313_PCR_23813_SY_FLOWS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. San Francisco, USA; 20100222, 16 February 2010 (2010-02-16), XP050433841, [retrieved on 2010-02-16]

## Description

### FIELD OF THE INVENTION

The present invention relates to the field of communications technologies, and in particular, to a method and apparatus for controlling a data flow of a subscriber service.

### BACKGROUND OF THE INVENTION

With the large-scale deployment of the 3G, the use of data services is greatly propelled. For an operator, facing fierce competition, in order to improve loyalty of subscribers, it is an important means to provide QoS (Quality of Service, quality of service) guarantees of data services.

PCC (Policy and Charging Control, policy and charging control) is a set of policy and charging control mechanisms defined by the 3GPP (3rd Generation Partnership Project, 3rd generation partnership project). A core of the PCC mechanism is that: when a data flow bearer is established, a GateWay (gateway) device requests a control policy and a charging policy of a data flow from a PCRF (Policy and Charging Function, policy and charging rules function). The PCRF, according to subscriber information stored in an SPR (Subscription Profile Repository, subscription profile repository), bearer layer information provided by the GateWay, and some local policies configured by the operator on the PCRF as well as service layer information if an AF (Application Function, application function) provides the service layer information of a service to the PCRF, generates a dynamic charging and service data flow control policy or determines a static charging and service data flow control policy to be activated, and delivers a command to the GateWay to install the generated dynamic policy or activate the determined static policy stored in a PCEF (Policy and Charging Enforcement Function, policy and charging enforcement function). The GateWay performs resource allocation, data flow control, and charging control according to the installed or activated policy. The mechanism may implement precise control on a service data flow according to an operator policy, so as to implement a lean operation for a bandwidth.

In the foregoing PCC mechanism, the AF is a service network element, which provides related information of a service accessed by a subscriber. It is a P-CSCF in an IMS network. The AF can provide the PCRF with information such as a media type, a media format, a bandwidth, a service priority indication, and a service urgency indication. Meanwhile, the AF may also request a bandwidth and a QoS authorization from the PCRF.

In an actual data flow control process, a need is that policy control is performed on the data flow based on subscriber account information or a use accumulation of a charging system. In the prior art, a method for performing policy control on a data flow based on a use accumulation of traffic mainly includes:
1. A PCRF receives a total use quota of traffic from an SPR.
2. The PCRF generates a control policy of a data flow, where the control policy includes a monitoring keyword, an information report event trigger, and a traffic use threshold, and delivers and installs the control policy to a gateway device.
3. The gateway device performs policy control on the data flow of a subscriber service according to the control policy, and accumulates traffic of a data flow flowing through the gateway and satisfying the policy.
4. When an accumulated value reaches the use threshold specified in the control policy, or does not reach the use threshold specified in the control policy but satisfies the policy that the data flow need to be interrupted, the gateway device reports accumulated traffic information to the PCRF, where the information includes the monitoring keyword and the traffic accumulated value.
5. The PCRF deducts the traffic accumulated value reported by the gateway device from the total use quota of the traffic. If the PCRF determines that a new use quota needs to be delivered to the gateway device, steps 2 to 5 are repeated.

After the total use quota is used up, the PCRF implements different policy control on a data flow of a specific service or data flows of all services of the subscriber according to an operator policy or a subscriber policy, for example, respectively grants different QoS to traffic below 2G and traffic above 2G.

In the foregoing method, the gateway device and the PCRF cooperate to perform traffic accumulation of the data flow of the subscriber service, which can only completes the policy control based on the traffic accumulation, but cannot solve policy control based on subscriber account related information and charging related accumulation information, for example, cannot perform policy control based on expenditure accumulation. Furthermore, the solution increases a burden on the gateway device. The gateway device needs to process a large amount of data traffic in real time, and precise control of large-scale subscriber services greatly affects performance of the gateway device.

3GPP TS 32.240 V9.0.0 (2009-12) discloses that online charging is a process where charging information for network resource usage is collected concurrently with that resource usage in the same fashion as in offline charging. However, authorization for the network resource usage must be obtained by the network prior to the actual resource usage to occur. This authorization is granted by the Online Charging System upon request from the network. When receiving a network resource usage request, the network assembles the relevant charging information and generates a charging event towards the OCS in real-time. The OCS then returns an appropriate resource usage authorization. The resource usage authorization may be limited in its scope (e.g. volume of data or duration), therefore the authorization may have to be renewed from time to time as long as the user's network resource usage persists.

3GPP TS 32.296 V9.1.0 (2009-12) only discloses OCS internal architecture, and discloses the Event Based Charging Function (EBCF) performs event based charging and credit control (e.g. content charging): on the bearer level, based on bearer usage requests received from the network. It controls the bearer usage in the network, e.g. SMS; on a subsystem level, based on session resource usage requests received from the network (e.g. the IMS MRFC). It controls the resource availability in network, e.g. it has the ability to grant or deny the resource usage; on service level, based on application server requests received from the network (e.g. an IMS application server or MMS relay server). It controls the application service availability in the network, e.g. it has the ability to grant or deny the service usage in the network.

3GPP TS 32.299 V9.2.0 (2009-12) discloses vent charging with unit reservation, the process as follows: 1) Request for resource usage: a UE-A requests the desired content/service from a NE. 2) Units Determination: depending on the requested service the CIF determines the number of units accordingly. 3) Reserve Units Request: the CTF requests the OCF to reserve the number of units determined in item 2. 4) Rating Control: assisted by the rating entity the OCF calculates the number of monetary units that represents the price for the number of units determined in item 2. 5) Account Control: the OCF checks whether the user's account balance is sufficient for the requested reservation. 6) Reservation Control: if the user's account balance is sufficient then the corresponding reservation is made. 7) Reserve Units Response: the OCF informs the CTF of the reserved number of units. Items 3 to 7 may be repeated several times. 8) Reserved Units Supervision: simultaneously with the service delivery, the CTF monitors the consumption of the reserved units. 9) Content/Service Delivery: the CTF delivers the content/service at once, in fractions or in individually chargeable items, corresponding to the reserved number of units. 10) Debit Units Request: the CTF requests the OCF to assure the deduction of an amount corresponding to the consumed number of units from the subscriber's account. In the case that no further units are required for this service, an appropriate indication triggering the release of the remaining reservation is given. 11) Rating Control: assisted by the rating entity the OCF calculates the number of monetary units to deduct from the subscriber's account. 12) Account Control: the OCF triggers the deduction of the calculated amount from the subscriber's account. 13) Debit Units Response: the OCF informs the CTF of the actually deducted units. Items 10 to 13 may be repeated several times. 14) Session Release: the session is released.

Request for Comments: 4006 (Diameter Credit-Control Application, 2005-08-01) specifies a Diameter application that can be used to implement real-time credit-control for a variety of end user services such as network access, Session Initiation Protocol (SIP) services, messaging services, and download services.

3GPP TSG SA WG2 Meeting #78 TD S2-101158 (2010-02-15) defines a Sy interface between the OCS and the PCRF. The OCS contacting the PCRF (OCS-Centric approach); the PCRF contacting the OCS (PCRF-Centric Sy variant). The OCS acts as an AF (re-use the Rx interface between the OCS and the PCRF). OCS and PCRF dialoguing via the PCEF: configuration based solution; the solution using a slight Upgrade of Gx and Gy.

3GPP TSG SA WG2 Meeting #78 TD S2-101313 (2010-02-22) describes Sy connection should be organised on a per subscriber ID and PDN identifier basis, i.e. (at least) all PDN connections of a UE to the same APN are bound to the same Sy session. This is possible since multiple PDN-connections to the same APN are always controlled by the same PCRF.

### SUMMARY OF THE INVENTION

Embodiments of the present invention provide a method and apparatus for controlling a data flow of a subscriber service, so as to formulate a control policy of a data flow of a subscriber service according to a collection result of charging related information of the data flow of the subscriber service.

A method for controlling a data flow of a subscriber service specifically includes:
performing, by a policy generating unit, a policy decision according to its own configuration, information reported by a gateway device, subscription related information or information from an application layer, generating a service flow control rule, a charging control rule and an information collection rule of a subscriber, and combining the service flow control rule, the charging control rule and the information collection rule of a subscriber into a policy control rule;
installing, by the policy generating unit, the policy control rule to a charging trigger unit;
after successfully installing the policy control rule, the charging trigger unit extracting the information collection rule, adding the information collection rule to a corresponding charging request, and sending the charging request, wherein the charging trigger unit is the gateway device;
receiving, by a charging function unit, the charging request sent by the charging trigger unit, obtaining the information collection rule carried in the charging request, determining the information collection rule related to the charging request or a charging session corresponding to the charging request, wherein the charging function unit is an Online Charging System, OCS;
collecting, by the charging function unit, charging related information of the subscriber service according to the information collection rule;
upon detecting that a charging related information value of the subscriber service reaches a quota or a limit stipulated by the information collection rule, sending, by the charging function unit, to the policy generating unit a collection result of the charging related information, generating, by the policy generating unit, a control policy of a data flow of the subscriber service according to the charging related information, and installing, by the policy generating unit, the control policy to the gateway device, and controlling, by the gateway device, the data flow of the subscriber service according to the control policy.

A system for controlling a data flow of a subscriber service, comprising:
a policy generating unit, configured to perform a policy decision according to its own configuration, information reported by a gateway device, subscription related information or information from an application layer; generate a service flow control rule, a charging control rule and an information collection rule of a subscriber; combine the service flow control rule, the charging control rule and the information collection rule of a subscriber into a policy control rule; install the policy control rule to a charging trigger unit;
the charging trigger unit, configured to after successfully installing the policy control rule, extract the information collection rule, add the information collection rule to a corresponding charging request, and send the charging request, wherein the charging trigger unit is the gateway device;
a charging function unit, configured to receive the charging request sent by the charging trigger unit, obtain the information collection rule carried in the charging request, determine the information collection rule related to the charging request or a charging session corresponding to the charging request; collect charging related information of the subscriber service according to the information collection rule; detect that a charging related information value of the subscriber service reaches a quota or a limit stipulated by the information collection rule and send a collection result of the charging related information to the policy generating unit; the policy generating unit configured to generate a control policy of a data flow of the subscriber service according to the charging related information and install the control policy to the gateway device, the gateway device configured to control the data flow of the subscriber service according to the control policy, wherein the charging function unit is an Online Charging System, OCS.

It can be seen from the technical solutions provided by the foregoing embodiments of the present invention that, in the present invention, the charging related information of the subscriber service is collected, and the control policy of the data flow of the subscriber service is formulated according to the collection result of the charging related information. Therefore, richer policy control may be formulated, so as to perform precise control and policy formulation for the data flow of the subscriber service.

### BRIEF DESCRIPTION OF THE DRAWINGS

To illustrate the technical solutions according to the embodiments of the present invention more clearly, accompanying drawings needed for describing the embodiments are introduced briefly in the following. Obviously, the accompanying drawings in the following description are only some embodiments of the present invention, and persons of ordinary skill in the art may obtain other drawings from the accompanying drawings without making creative efforts.
FIG. 1 is a specific structural diagram of an apparatus for controlling on a data flow of a subscriber service according to Embodiment 1 of the present invention;
FIG. 2 is a processing flow chart of a method for controlling a data flow of a subscriber service according to Embodiment 2 of the present invention;
FIG. 3 is a specific structural diagram of an apparatus for controlling a data flow of a subscriber service according to Embodiment 3 of the present invention; and
FIG. 4 is a processing flow chart of a method for controlling a data flow of a subscriber service according to Embodiment 4 of the present invention.

### DETAILED DESCRIPTION OF THE EMBODIMENTS

To make the embodiments of the present invention more comprehensible, further explanation and illustration are provided in the following with reference to the accompanying drawings by taking several specific embodiments as examples, and each embodiment is not intended to limit the embodiments of the present invention.

### Embodiment 1

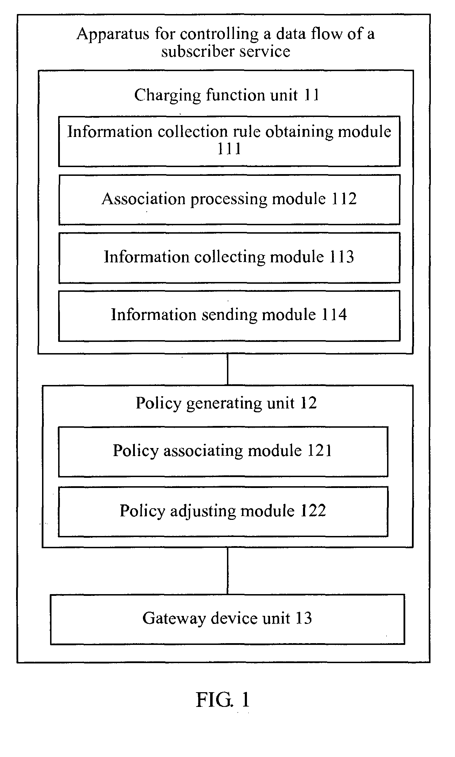

A specific structure of an apparatus for controlling a data flow of a subscriber service provided by this embodiment is as shown in FIG. 1, and includes: a charging function unit 11, a policy generating unit 12, and a gateway device unit 13.

The charging function unit 11 is configured to receive a configured information collection rule, determine, after receiving a charging request sent by a charging trigger unit, an information collection rule which is related to the charging request or a charging session corresponding to the charging request, collect, while performing charging control on the data flow of the subscriber service, according to the determined information collection rule, charging related information of the subscriber service, and send, when an accumulated value of the collected charging related information of the subscriber service satisfies a use quota stipulated by the determined information collection rule, to the policy generating unit a collection result of the charging related information of the subscriber service.

The policy generating unit 12 is configured to generate, according to the collection result of the charging related information of the subscriber service sent by the charging function unit, a control policy of the data flow of the subscriber service, and deliver and install the control policy to the gateway device unit. The control policy includes a control policy of the data flow of the subscriber service and a charging control policy. The control policy of the data flow of the subscriber service includes QoS control, bandwidth control, and gating control (approval or denial) of the subscriber service. The charging control policy includes a rate group, a service identifier, a charging method (online or offline), and a charging association identifier.

The gateway device unit 13 is configured to perform corresponding policy control to the data flow of the subscriber service according to the control policy of the data flow of the subscriber service delivered and installed by the policy generating unit. The gateway device unit includes a PCEF (Policy and Charging Enforcement Function, policy and charging enforcement function).

The charging function unit 11 may specifically include an information collection rule obtaining module 111, an association processing module 112, an information collecting module 113, and an information sending module 114.

The information collection rule obtaining module 111 is configured to receive, through a management interface between it and a product management system or another entity, an information collection rule configured for each subscriber or a certain type of subscribers or a specified subscriber. Alternatively, the information collection rule obtaining module 111 receives a charging message sent by the gateway device, and obtains an information collection rule carried in the charging message, where the information collection rule is extracted by the gateway device from a policy control rule delivered by the policy generating unit. The information collection rule received or obtained by the information collection rule obtaining module 111 may be used as the configured information collection rule received by the charging function unit 11.

The association processing module 112 is configured to determine, after receiving the charging request sent by the gateway device, the information collection rule which is related to the charging request or the charging session corresponding to the charging request among the information collection rules received by the information collection rule obtaining module. The information collection rule includes one or multiple sub-rules, where the sub-rule includes one or multiple of rule items such as a rule identifier, a rule user, an item of charging related information needs to be collected, a limit or a quota corresponding to the item and its unit of measurement, an identifier of a service needing to collect charging information, a rate group, an access point identifier or address, and a collection manner. The item of the charging related information, needs to be collected, is called a collection item for short. The service identifier is used to identify a service or identify a service component of a finer granularity, the rate group may gather a group of services of the same rate, and a service identifier and a rate group used subsequently may be the same as these.

The information collecting module 113 is configured to collect, according to the information collection rule determined by the association processing module, charging related information of a corresponding subscriber service. The charging related information includes one or multiple pieces of information such as an account balance limit or quota, and a use accumulation of one or multiple specific services or a certain type of services or all services in a certain period.

The information sending module 114 is configured to initiate a session request to establish a session with the policy generating unit, and send the collection result of the charging related information of the subscriber service to the policy generating unit in the session. The information sending module 114 may directly send, upon detecting that a charging related information value of the subscriber service reaches the quota or a limit stipulated by the information collection rule, the collection result to the policy generating unit, and in this case, if the policy generating unit does not have a policy control rule that can be associated with the collection result, the policy generating unit saves the collection result, and performs a policy decision based on the collection result during subsequent policy decision. Alternatively, the information sending module 114 directly sends, upon detecting that a charging related information value of the subscriber service reaches the quota or a limit stipulated by the information collection rule, the collection result to the policy generating unit, and in this case, if the policy generating unit does not have a policy control rule that can be associated with the collection result, the policy generating unit returns processing failure information to the charging function unit, and the charging function unit keeps the collection result, and resends the collection result to the policy generating unit at subsequent proper timing.

Optionally, after detecting that the charging related information value of the subscriber service reaches the quota or the limit stipulated by the information collection rule, the information sending module 114 judges whether the collection result needs to be sent to the policy generating unit. If yes, the collection result is sent to the policy generating unit; otherwise, the collection result is not sent. A Method for determining whether the collection result shall be sent may be: The charging function unit determines, according to a rule or a condition configured by an operator through the management interface, that the collection result shall be sent to the policy generating unit. Alternatively, the charging function unit determines, according to a charging session type and charging information sent in the charging session, that the collection result shall be sent to the policy generating unit. The charging information includes a rate group, a service identifier, the rate group + the service identifier, and so on. Alternatively, the charging request sent by the gateway device to the charging function unit carries a parameter, the parameter indicates that the charging session correspondingly has a policy control rule generated by the policy generating unit, and the charging function unit determines, according to the parameter, that the collection result shall be sent to the policy generating unit.

The foregoing charging function unit may be an OCS (Online Charging System, online charging system), or may be another real-time or quasi-real-time charging system or independent account management system.

The foregoing charging trigger unit may be an entity for triggering online charging on the subscriber service, and it may initiate an online charging request. The charging trigger unit may be a gateway device or another network element, as long as the foregoing functions can be implemented.

The policy generating unit 12 may specifically include a policy associating module 121 and a policy adjusting module 122.

The policy associating module 121 is configured to obtain each policy control rule that is already generated and saved by the policy generating unit; judge whether a policy control rule that is associated with the collection result sent by the charging function unit exists; if yes, save the collection result and return an acknowledgment message to the charging function unit; otherwise, save the collection result or return error information to the charging function unit.

The policy adjusting module 122 is configured to determine, according to an operator policy, whether the associated policy control rule needs to be adjusted according to the collection result, and, if yes, adjust, according to the collection result and other information such as a local rule, subscription information, and application layer information obtained by the policy generating unit, the affected policy control rule, to generate a new control policy of the data flow of the subscriber service.

### Embodiment 2

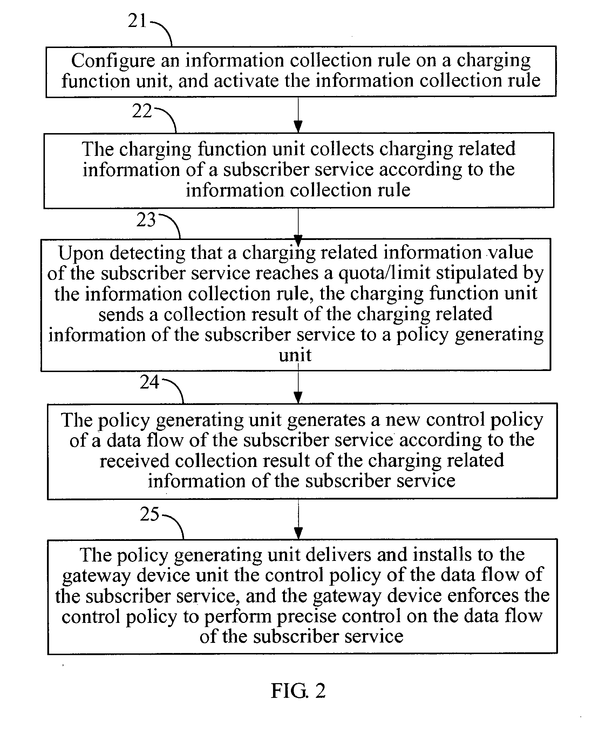

Based on the apparatus for controlling a data flow of a subscriber service shown in FIG. 1, a processing process of a method for controlling a data flow of a subscriber service provided by this embodiment, as shown in FIG. 2, includes the following processing steps.

Step 21: Configure an information collection rule on a charging function unit, and activate the information collection rule.

The charging function unit may be a subscriber home domain OCS (Online Charging System, online charging system), or may be another real-time or quasi-real-time charging system or independent account management system, which is the same in the following.

Configuration timing of the information collection rule may be configuration according to a need. It may be pre-configured, that is, may be configured before a charging request is received, or may be configured upon receipt of a charging request. The embodiments of the present invention do not limit the configuration timing of the information collection rule.

The information collection rule includes one or multiple sub-rules. The sub-rule includes one or multiple of rule items such as a rule identifier, a rule user, an item of charging related information needs to be collected, a limit or a quota corresponding to the item and its unit of measurement, an identifier of a service needing to collect charging information, a rate group, an access point identifier or address, and a collection manner. The item of the charging related information, where the information needs to be collected, is called a collection item for short. The service identifier is used to identify a service or identify a service component of a finer granularity, the rate group may gather a group of services of the same rate, and a service identifier and a rate group used subsequently may be the same as these.

The rule identifier is used to identify a sub-rule (corresponding to a group of rule items). A policy deciding module may recognize the identifier, which in combination with subscriber information, a subscriber may be located; in combination with information such as the service identifier, the rate group and/or the access point identifier (or address), a specific bearer of the subscriber may be located. If the policy deciding module receives the identifier from the charging function unit, it is regarded that the quota or the limit of the collection item corresponding to the identifier is already satisfied.

The rule user is used to identify a subscriber using the rule, which is used to associate a group of rule items with charging information of a certain subscriber. The subscriber may be a specific subscriber or a type of subscribers. If specific information such as the service identifier, the rate group and/or the access point identifier (or address) is not specified in the rule item, it indicates that the rule is applicable to charging of all data services of the subscriber, so that a charging system associates the rule with all charging requests of the subscriber or charging sessions corresponding to the charging requests. If specific information such as the service identifier, the rate group and/or the access point identifier or address is specified in the rule item, it indicates that the rule is applicable to the charging of a specific service of the subscriber and/or the rate group and/or a data service of a specific access point, so that the charging system associates the rule with a specific service charging session of the subscriber.

The collection item includes, but is not limited to, an account balance limit or quota, and a use accumulation of one or multiple specific services or a certain type of services or all services in a certain period. The certain period may be a month, a day, and a current session, and so on. The accumulation may be based on traffic, based on a time length or based on a consumption amount, and so on. The service may be a data service, a speech service and/or a message service, and so on. The limit or quota corresponding to the item may be a threshold value of an upper limit or a lower limit, and so on.

In an actual application, the following two methods may be adopted to configure the foregoing determined information collection rule on the charging function unit, and activate the information collection rule.

Method 1: The policy generating unit performs a policy decision according to information such as its own configuration, information reported by a gateway device, subscription related information, and information from an application layer, so as to generate a service flow control rule (such as QoS allocation) and a charging control rule. Meanwhile, the policy generating unit generates an information collection rule of the subscriber, and combines the service flow control rule, the charging control rule, and the information collection rule into a policy control rule. The policy generating unit installs the generated policy control rule to the gateway device. After successfully installing the policy control rule, the gateway device extracts the information collection rule, and adds it into a corresponding charging request. For example, in an OCS, the request is a credit control request, so as to initiate a charging request to the charging function unit, and meanwhile provide the information collection rule to the charging function unit. After receiving the foregoing charging request, the charging function unit directly activates the collection rule carried in the charging request.

Method 2: An operator configures, through a management interface between its product management system or another entity and the charging function unit, for each subscriber or a certain type of subscribers or a specified subscriber, the information collection rule of the subscriber on the charging function unit, and activates or deactivates the information collection rule. In an actual application, the information collection rule may be configured for each subscriber or a certain type of subscribers or a specified subscriber according to subscriber subscription information or an operator policy.

Step 22: The charging function unit collects charging related information of a subscriber service according to the information collection rule.

After receiving the charging request sent by a charging trigger unit, the charging function unit determines an information collection rule related to the charging request or the charging session corresponding to the charging request, that is, determines an information collection rule affected by charging information reported by the charging request or the charging session corresponding to it, or associates the information collection rule with the charging request or the charging session corresponding to it. While charging processing is performed on the subscriber service, corresponding information is collected according to a collection item of the foregoing information collection rule. The information includes, but is not limited to, an account balance limit, and a use accumulation of one or multiple specific services or a certain type of services or all services in a certain period. The certain period may be a month or a day. The accumulation may be based on traffic, based on a time length or based on a consumption amount. The service may be a data service, a speech service, a message service, and so on.

For example, collect an accumulated value of charge of a current session of the subscriber service. The charging trigger unit is an entity for triggering online charging on a subscriber service, it may initiate an online charging request, and may be a gateway device or another network element.

The charging function unit determines, according to one or multiple pieces of information such as the subscriber identifier, the access point, a gateway device address, the service identifier, and the rate group, the information collection rule corresponding to the charging request or the charging session corresponding to it, and performs association. During management such as credit authorization and charging information processing on the charging session, the charging function unit needs to collect or detect corresponding information according to the associated information collection rule.

In an actual application, the foregoing information collection rule and the rule used for charging related accumulation are respectively used for different purposes. The charging related accumulation rule is mainly used to determine a rate or a discount, while the foregoing information collection rule is mainly used to control a service data flow, for example, allocate QoS. In the actual application, the two may be set separately or combined.

If the charging trigger unit is a gateway device, the charging function unit may specify some processing actions for the gateway device, so as to specify, when the charging function unit cannot grant credit for a credit request of the gateway device, actions of the gateway device for processing the data flow of the subscriber service. The specified processing actions may include: service interruption, access restriction, and redirection of a data packet to an application server.

However, the foregoing processing actions may affect an information collection function. For example, for the access restriction, after reporting the last authorized data unit, the gateway device does not perform reporting any more, but the service keeps passing, and for this type of service, the charging function unit cannot perform information collection. For this scenario, there may be two solutions:
1. When the charging function unit cannot perform the credit authorization, for example, it is determined that a balance of the subscriber is not sufficient, and a determined processing action to be specified is "allow a service data flow to pass", judge whether an affected information collection rule exists. If yes, do not send an interruption event, and instead, grant a "credit amount" normally. The "credit amount" is not really used for credit control. The gateway device manages the credit amount, monitors a use situation, and reports the charging information to the charging function unit when the reporting of the charging information is satisfied. The charging function unit collects information according to the report of the gateway device, and performs 0-rate processing on the reported information.
2. When the charging function unit cannot perform the credit authorization, for example, it is determined that a balance of the subscriber is not sufficient, a determined processing action to be specified is "allow a service data flow to pass", and it is determined that an affected information collection rule exists, send a new indication meaning that the data flow of the service is allowed to pass, and report service use information. After receiving the indication, the gateway device no longer performs credit management, and only reports the service use information to the charging function unit, the charging function unit collects information according to the report of the gateway device, and the charging function unit does not perform the charging processing on the reported information.

Step 23: Upon detecting that a charging related information value of the subscriber service reaches a quota or a limit stipulated by the information collection rule, the charging function unit sends a collection result of the charging related information of the subscriber service to the policy generating unit.

When an accumulated value of the charging related information of the subscriber service, where the charging related information is collected by the charging function unit, reaches the quota or the limit stipulated by the information collection rule, for example, collected fee accumulation information reaches an upper limit threshold value stipulated by the information collection rule, the charging function unit sends the collection result of the charging related information of the subscriber service to the policy generating unit.

The charging function unit may adopt the following two methods to send the collection result of the charging related information.
Method 1: Upon detecting that the charging related information value of the subscriber service reaches the quota or the limit stipulated by the information collection rule, the charging function unit directly sends the collection result to the policy generating unit, and in this case, the policy generating unit may not have a policy control rule that can be associated with the collection result, the policy generating unit saves the collection result, and performs policy decision based on the collection result during the subsequent policy decision.
Method 2: Upon detecting that the charging related information value of the subscriber service reaches the quota or the limit stipulated by the information collection rule, the charging function unit directly sends the collection result to the policy generating unit, and in this case, the policy generating unit may not have a policy control rule that can be associated with the collection result, the policy generating unit returns processing failure information to the charging function unit, and the charging function unit keeps the collection result, and sends the collection result to the policy generating unit subsequently. The subsequent sending may be that: The charging function unit actively sends the collection result to the policy generating unit. A sending condition may be configured by the operator. For example, the charging function unit performs sending after receiving a new charging session; or the policy generating unit actively performs obtaining, and the charging function unit sends, after receiving an obtaining request from the policy generating unit, the collection result to the policy generating unit.

Optionally, upon detecting that the charging related information value of the subscriber service reaches the quota or the limit stipulated by the information collection rule, and before sending the collection result of the charging related information to the policy generating unit, the charging function unit first judges whether the collection result shall be sent, and if the sending shall be performed, sends the collection result to the policy generating unit. If the sending shall not be performed, the charging function unit saves the collection result first, and sends the collection result to the policy generating unit at subsequent proper timing. A Method for determining whether the collection result shall be sent may be: The charging function unit determines, according to the rule or a condition configured by the operator through the management interface, that the collection result shall be sent to the policy generating unit. Alternatively, the charging function unit determines, according to a charging session type and the charging information sent in the charging session, that the collection result shall be sent to the policy generating unit. The charging information includes the rate group, the service identifier, the rate group + the service identifier, and so on. Alternatively, the charging request sent by the gateway device to the charging function unit carries a parameter, where the parameter indicates that the charging session correspondingly has the policy control rule generated by the policy generating unit, and the charging function unit determines, according to the parameter, that the collection result shall be sent to the policy generating unit.

The charging function unit may send the collection result to the policy generating unit based on a session, or send the collection result to the policy generating unit not based on a session, the descriptions of which are respectively as follows:
If the collection result is sent based on a session, when needed to send the information collection result to the policy generating unit, the charging function unit initiates a session establishment request to the policy generating unit, and sends in the session the subscriber identifier and the information collection result, and one or multiple pieces of the following information such as the access point identifier or address, the gateway device address, the service identifier and the rate group may also be included. The session protocol may be a Diameter protocol. During the session establishment process, the charging function unit is a session initiator.

If the collection result is sent not based on a session, when needed to send the information collection result to the policy generating unit, the charging function unit sends a notification message to the policy generating unit. The notification message carries the subscriber identifier and the information collection result, and one or multiple pieces of the following information such as the access point identifier or address, the gateway device address, the service identifier and the rate group may also be included.

The foregoing collection result of the charging related information of the subscriber service may be an event or a rule identifier or pairing information of a collection item and a collection value. The specific collection result depends on configuration of the charging function unit and the policy generating unit, and a specific method is as follows.

If the information collection rule is generated by the policy generating unit and is sent to the charging function unit, and the information collection rule includes an event trigger, the collection result may be an event corresponding to the event trigger.

If the charging function unit and the policy generating unit are both configured with the rule identifier, that is, the policy generating unit may recognize the rule directly by using the rule identifier, the charging information collection result may be the rule identifier.

If the policy generating unit cannot recognize the information collection result directly according to the policy identifier, the information collection result may be the pairing information of the collection item and the collection value.

In an actual application, the charging function unit may perform inverse calculation according to an accumulation quota or limit stipulated by the information collection rule and a local rule of the charging function unit, so as to perform resource authorization, and complete amount information deduction before the resource authorization. For example, the information collection rule stipulates that an upper limit threshold value of the traffic of the subscriber service is traffic of 100 M, if the charging function unit authorizes traffic of 2 M to the authorization gateway device once, a use quota of the traffic after deduction is 98 M. When the amount of the use quota becomes 0 after deduction, statistical traffic information reaches the accumulation quota stipulated by the information collection rule. Alternatively, the charging function unit performs the inverse calculation directly according to the local rule, and performs the resource authorization. Subsequently, when the gateway device reports actual resource information, the accumulation is performed according to the information collection rule until the accumulation reaches the accumulation quota stipulated by the information collection rule.

Step 24: The policy generating unit generates a new control policy of the data flow of the subscriber service according to the received collection result of the charging related information of the subscriber service.

After receiving the collection result of the charging related information of the subscriber service and related information sent by the charging function unit, the policy generating unit extracts the subscriber identifier and other related information, associates the collection result with a policy control rule that might be affected; if the association fails, returns error information to the charging function unit, or saves the received information, and performs the policy decision based on the information during subsequent policy decision; if the association succeeds, stores the received information, and returns an acknowledgment message to the charging function unit. After receiving the acknowledgment information, the charging function unit performs post-processing on the information collection rule; if the information collection rule is for one-time use, invalidates the information collection rule; and if the rule is cyclic, configures the rule again, so as to activate the rule for use in a next cycle.

The policy generating unit determines, according to an operator policy, whether the associated policy control rule needs to be adjusted according to the collection result sent by the charging function unit, so as to adjust control of a corresponding data service flow, and when the policy control rule needs to be adjusted, performs re-decision, according to the collection result in combination with other information (including the local rule, the subscription information, and application layer information) obtained by the policy generating unit, on the associated service flow control policy, and generates the new control policy of the data flow of the subscriber service.

Step 25: The policy generating unit delivers and installs to the gateway device unit the control policy of the data flow of the subscriber service, and the gateway device enforces the control policy to perform precise control on the data flow of the subscriber service.

After generating the new control policy of the data flow of the subscriber service, the policy generating unit delivers and installs to the gateway device (that is, a policy enforcing module) the new control policy of the data flow of the subscriber service, and meanwhile invalidates the original control policy. The gateway device unit performs, according to the received control policy, corresponding control on the data flow of the subscriber service. The control policy includes QoS control, bandwidth control, and gating control (approval or denial) of the subscriber service.

### Embodiment 3

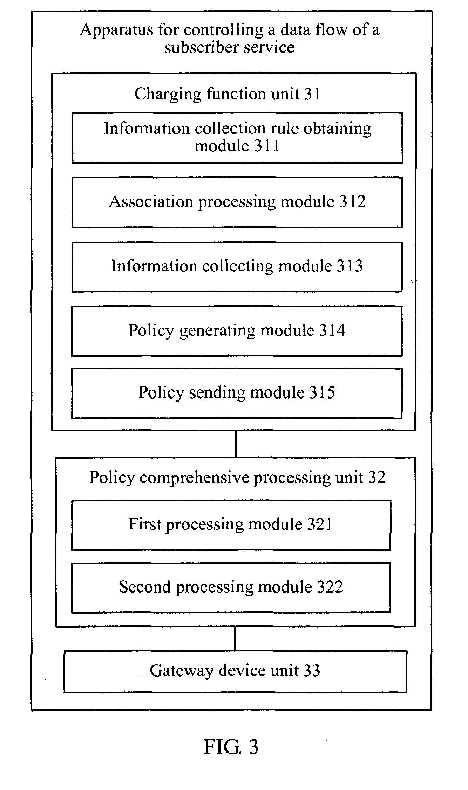

A specific structure of an apparatus for controlling a data flow of a subscriber service provided by this embodiment is as shown in FIG. 3, and includes: a charging function unit 31, a policy comprehensive processing unit 32, and a gateway device unit 33.

The charging function unit 31 is configured to receive a configured information collection rule, receive a charging request sent by a charging trigger unit, determine an information collection rule related to the charging request or a charging session corresponding to the charging request, collect charging related information of a subscriber service according to the information collection rule, generate a control policy of the data flow of the subscriber service according to a collection result of the charging related information, and send the control policy to the policy comprehensive processing unit.

The policy comprehensive processing unit 32 is configured to process the control policy of the data flow of the subscriber service sent by the charging function unit to generate a final control policy of the data flow of the subscriber service, and deliver and install the final control policy to the gateway device unit.

The gateway device unit 33 is configured to perform, according to the final control policy of the data flow of the subscriber service delivered and installed by the policy comprehensive processing unit, corresponding policy control on the data flow of the subscriber service.

The charging function unit 31 may specifically include: an information collection rule obtaining module 311, an association processing module 312, an information collecting module 313, a policy generating module 314, and a policy sending module 315.

The information collection rule obtaining module 311 is configured to receive, through a management interface between it and a product management system or another entity, the information collection rule configured for each subscriber or a certain type of subscribers or a specified subscriber; alternatively, receive a charging message sent by the gateway device, and obtains an information collection rule carried in the charging message. The information collection rule is extracted by the gateway device from a policy control rule delivered by the policy comprehensive processing unit.

The association processing module 312 is configured to determine, after receiving the charging request sent by the gateway device, the information collection rule related to the charging request or the charging session corresponding to the charging request and obtained by the information collection rule obtaining module. The information collection rule includes one or multiple sub-rules. The sub-rule includes one or multiple of rule items such as a rule identifier, a rule user, an item of the charging related information needs to be collected, a limit or a quota corresponding to the item and its unit of measurement, an identifier of a service requiring collection of charging information, a rate group, an access point identifier or address, a collection manner, and so on. The item of the charging related information needs to be collected is called a collection item for short. The service identifier is used to identify a service or identify a service component of a finer granularity, the rate group may gather a group of services of the same rate, and a service identifier and a rate group used subsequently may be the same as these.

The information collecting module 313 is configured to collect, according to the information collection rule determined by the association processing module, the charging related information of the corresponding subscriber service. The charging related information includes one or multiple pieces of information such as an account balance limit or quota, and a use accumulation of one or multiple specific services or a certain type of services or all services in a certain period.

The policy generating module 314 is configured to, when an accumulated value of the charging related information of the subscriber service, where the charging related information is collected by the information collecting module reaches a quota or a limit stipulated by the information collection rule, determine a service data flow affected by the collection result of the charging related information; obtain subscriber related information stored in the charging function unit, where the subscriber related information includes information such as subscriber account information and subscriber level information, and some application layer policies configured on the charging function unit, and generate the control policy of the service data flow according to the subscriber related information and the collection result.

Where, a policy sending module 315 is configured to initiate a session request to establish a session with the policy comprehensive processing unit, and send the control policy to the policy comprehensive processing unit in the session.

The policy comprehensive processing unit 32 includes at least one of a first processing module 321 and a second processing module 322.

The first processing module 321 is configured to perform, when the control policy sent by the charging function unit is a determined policy value, according to subscriber subscription information, some of its own configured policies, some other collected information, and an effective policy, judgment; if it is determined that the control policy does not need adjustment, directly use the control policy as the final control policy; and if it is determined that the control policy needs adjustment, perform, according to the control policy, some of its own configured policies, information reported by some other gateway devices, and input information such as information sent by an application layer, policy re-decision, so as to generate a new final control policy for the data flow of the subscriber service.

The second processing module 322 is configured to perform, when the control policy sent by the charging function unit is an indicative policy that cannot be directly enforced by the gateway device, according to the policy, some of its own configured policies, the information reported by some other gateway devices, and inputs such as the information sent by the application layer and the effective policy, policy re-decision, so as to generate a new final control policy for the data flow of the subscriber service.

Optionally, after receiving the control policy sent by the charging function unit 31, the policy comprehensive processing unit 32 determines that the control policy affects the effective policy delivered and installed to the gateway device by the policy comprehensive processing unit, and generates, according to the control policy and the effective policy, a final control policy covering the effective policy.

Optionally, after receiving the control policy generated by the charging function unit and before further processing, the policy comprehensive processing unit first judges whether to accept the policy sent by the charging function unit; if a determination result is yes, performs the foregoing subsequent processing; and if the determination result is no, directly rejects the control policy sent by the charging function unit.

### Embodiment 4

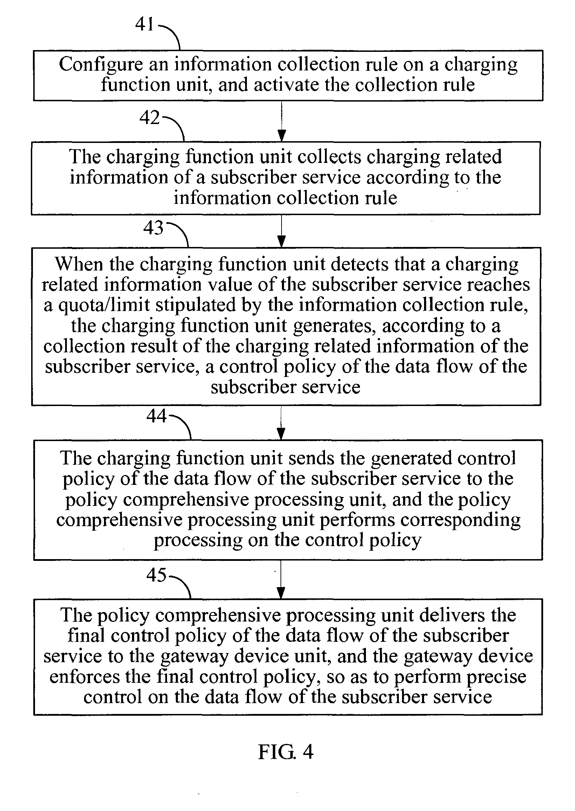

Based on the apparatus for controlling a data flow of a subscriber service shown in FIG. 3, a processing process of a method for controlling a data flow of a subscriber service provided by this embodiment, as shown in FIG. 4, includes the following processing steps:
Step 41: Configure an information collection rule on a charging function unit, and activate the collection rule.

The charging function unit is a subscriber home domain charging system, for example, an OCS. The charging function unit includes a policy generation capability, and may generate a control policy of a charging related service data flow. The generated policy may be directly enforced by a gateway device, or the generated policy may be used as an input of a policy comprehensive processing unit, and the policy comprehensive processing unit, according to it, performs adjustment or regenerates a new service data flow control policy that may be enforced by the gateway device.

Reference may be made to the foregoing Embodiment 2 for a definition of the information collection rule.

In an actual application, two methods are used to configure the information collection rule of data flow policy control on the charging function unit and activate the collection rule, and reference may be made to the foregoing Embodiment 2 for details.

Step 42: The charging function unit collects charging related information of a subscriber service according to the information collection rule.

After receiving a charging request sent by a charging trigger unit, the charging function unit determines an information collection rule related to the charging request or a charging session corresponding to the charging request, specifically determines an information collection rule affected by charging information reported by the charging request or its corresponding charging session, or associates the information collection rule with the charging request or its corresponding charging session. Next, during charging processing of the subscriber service, corresponding information is collected according to a collection item of the information collection rule. The information includes, but is not limited to, an account balance limit, and a use accumulation of one or multiple specific services or a certain type of services or all services in a certain period. For example, a charge accumulated value of the subscriber service in a certain period is collected. The certain period may be a month or a day. The accumulation may be based on traffic, based on a time length or based on a consumption amount, and so on. The service may be a data service, a speech service, a message service, and so on.

The foregoing charging trigger unit is an entity for triggering online charging of a subscriber service, which may initiate an online charging request and may be a gateway device or another network element.

The charging function unit determines, according to one or multiple pieces of information such as a subscriber identifier, an access point, a gateway device address, a service identifier, and a rate group, the information collection rule corresponding to the charging session, and performs association. During the management such as credit authorization and charging information processing on the charging session, the charging function unit needs to collect or detect corresponding information according to the associated information collection rule.

In an actual application, the foregoing information collection rule and a rule used for charging related accumulation are respectively used for different purposes. The rule of charging related accumulation is mainly used to determine a rate or a discount, and the information collection rule is mainly used to control a service data flow, for example, allocate QoS. In the actual application, the two may be set separately or combined.

As described in Embodiment 2, the charging function unit may specify some processing actions for the gateway device, so as to specify processing actions of the gateway device when the charging function unit cannot grant credit for a credit request of the gateway device. However, the processing event may affect an information collection function. For example, for access restriction, after reporting the last authorized data unit, the gateway device does not perform reporting any more, but services keep passing, and for this type of services, the charging function unit cannot perform information collection. For this scenario, there may be two solutions may exist:
1. When the charging function unit cannot perform credit authorization, if it is determined that a balance of a subscriber is not sufficient, and a determined action to be specified is "allow a service data flow to pass", judge whether an affected information collection rule exists. If yes, do not send interruption event, and instead grant a "credit amount" normally. The "credit amount" is not really used for credit control. The gateway device manages the credit amount, monitors a use situation, and reports charging information to the charging function unit when reporting of the charging information is satisfied. The charging function unit collects information according to the report of the gateway device, and performs 0-rate processing on the reported information.
2. When the charging function unit cannot perform the credit authorization, if it is determined that the balance of the subscriber is not sufficient, the determined action to be specified is "allow a service data flow to pass", and it is determined that an affected information collection rule exists, send a new indication meaning that the service data flow is allowed to pass, and report service use information. After receiving the indication, the gateway device does not perform credit management, and only reports the service use information to the charging function unit, the charging function unit collects information according to the report of the gateway device, and the charging function unit does not perform charging processing on the reported information.

Step 43: When the charging function unit detects that a charging related information value of the subscriber service reaches a quota or a limit stipulated by the information collection rule, the charging function unit generates, according to a collection result of the charging related information of the subscriber service, a control policy of the data flow of the subscriber service.

When an accumulated value of the charging related information of the subscriber service, where the charging related information is collected by the charging function unit, reaches the quota or the limit stipulated by the information collection rule, for example, collected charge accumulation information reaches an upper limit threshold value stipulated by the information collection rule, the charging function unit determines a service data flow affected by the collection result (which may be all service data flows of the subscriber), and obtains subscriber related information stored in the charging function unit. The subscriber related information includes information such as subscriber account information and subscriber level information, and some application layer policies configured on the charging function unit, and so on. The charging function unit combines these pieces of information and the collection result to generate the control policy of the service data flow.

Optionally, before generating the control policy of the service data flow, the charging function unit first judges whether policy generation shall be performed; if a determination result is "yes", generates the policy; otherwise, the charging function unit does not generate the policy. A method for determining whether the control policy of the service data flow shall be generated may be: The charging function unit determines, according to a charging session type, whether the control policy of the service data flow shall be generated. Alternatively, the charging request sent by the gateway device to the charging function unit carries a parameter, the parameter indicates that the charging session correspondingly has a policy control rule generated by the policy generating unit, and the charging function unit determines, according to the parameter, that the control policy of the service data flow shall be generated.

The generated policy may be a determined policy value. That is, the charging function unit may allocate specific QoS. The policy may be directly enforced by the gateway device, or cannot be directly enforced by the gateway device but can be processed by the policy comprehensive processing unit.

Alternatively, the generated policy may be an indicative policy. The indicative policy may not be directly enforced by the gateway device, and indicates how to adjust or control the control policy of the service data flow to the policy comprehensive processing unit, for example, adjust parameters such as the QoS and a bandwidth. For example, the charging function unit may, according to the collection result and some of its information, determine to decrease the QoS of a certain service data flow of the subscriber or the QoS of all data services of the subscriber, or prohibit a certain data service of the subscriber. The indication information may carry more detailed information, for example, adjusting a percentage of the QoS, for example, decreasing the QoS by 20% on the basis of the current QoS. The policy information is used as an input of the policy comprehensive processing unit, and the policy comprehensive processing unit needs to adjust an effective policy according to it, or perform policy re-decision to generate a new control policy of the service data flow.

In an actual application, the foregoing charging processing module may perform inverse calculation according to an accumulation quota or limit stipulated by the information collection rule and a local rule of the charging function unit, so as to perform resource authorization, and complete amount information deduction before the resource authorization. Reference may be made to the description of Embodiment 2 for the specific method.

Step 44: The charging function unit sends the generated control policy of the data flow of the subscriber service to the policy comprehensive processing unit, and the policy comprehensive processing unit performs corresponding processing on the control policy.

Between the charging function unit and the policy comprehensive processing unit, the control policy generated by the charging function unit may be sent based on a session, or the control policy generated by the charging function unit may be sent not based on a session.

If the control policy generated by the charging function unit is sent based on the session, when needing to send the policy generated by it to the policy comprehensive processing unit, the charging function unit initiates a session establishment request to the policy comprehensive processing unit, and sends the foregoing control policy in the session. The control policy may include one or multiple pieces of information such as a subscriber identifier, a service identifier, a rate group, the QoS, the bandwidth, a QoS adjustment indication including an increase/decrease indication and an adjustment percentage, a bandwidth adjustment indication including an increase/decrease indication and an adjustment percentage, and gating control. A session protocol may be a Diameter protocol. A command used may be AAR or AAA or CCR or CCA. During a session establishment process, the charging function unit is a session initiator.

If the control policy generated by the charging function unit is sent not based on the session, when needing to send the policy generated by it to the policy comprehensive processing unit, the charging function unit sends a notification message to the policy comprehensive processing unit, and the notification message carries the foregoing control policy.

After receiving the control policy generated by the charging function unit, the policy comprehensive processing unit performs corresponding processing on the control policy, including:
For the determined policy value which is generated by the charging function unit and includes a control policy that can be directly enforced by the gateway device, or the control policy that cannot be directly enforced by the gateway device but can be processed by the policy comprehensive processing unit, the policy comprehensive processing unit performs judgment according to subscriber subscription information, some of its own configured policies, some other collected information, and the effective policy. If it is determined that no further adjustment is needed, the control policy is used as the final control policy and directly delivered and installed to the gateway device. If it is determined that adjustment is needed, the policy comprehensive processing unit combines inputs such as the control policy, some of its own configured policies, information reported by some other gateway devices, and information sent by an application layer, to perform policy re-decision, so as to generate a new final control policy for the data flow of the subscriber service.

For the indicative policy generated by the charging function unit, the policy comprehensive processing unit combines such as the policy, some of its own configured policies, the information reported by some other gateway devices, the information sent by the application layer, and the effective policy, to perform policy re-decision, so as to generate a new final control policy for the data flow of the subscriber service. In the simplest way, with other inputs unchanged, the policy comprehensive processing unit obtains the effective policy, adjusts, according to the indicative policy, parameters such as the QoS and the bandwidth of the effective policy directly, and uses the adjusted policy as the new final control policy. In a practical example, the bandwidth allocated to a subscriber is originally 2 Mbps, after detecting that traffic accumulation reaches 2 G, the charging function unit decides to decrease the bandwidth by 50%, and sends the indicative policy to the policy comprehensive processing unit. The policy comprehensive processing unit obtains the affected effective policy, and with other inputs unchanged, directly decreases a bandwidth value in the effective policy by 50%, where the decreased bandwidth is 1 Mbps, and delivers and installs the new final control policy. The gateway device enforces the policy and controls the bandwidth of the subscriber.

Optionally, after receiving the control policy generated by the charging function unit and before further processing, the policy comprehensive processing unit first judges whether to accept the policy sent by the charging function unit; if a determination result is yes, performs subsequent processing; and if the determination result is no, directly rejects the control policy sent by the charging function unit.

Optionally, after receiving the control policy generated by the charging function unit and before further processing, the policy comprehensive processing unit determines whether the policy affects the effective policy delivered and installed to the gateway device by the policy comprehensive processing unit; if yes, generates a final control policy covering the effective policy; and otherwise, delivers and installs the final control policy.

Step 45: The policy comprehensive processing unit delivers the final control policy of the data flow of the subscriber service to the gateway device unit, and the gateway device enforces the final control policy, so as to perform precise control on the data flow of the subscriber service.

After generating the new final control policy for the data flow of the subscriber service, the policy comprehensive processing unit delivers and installs the new final control policy to the gateway device, that is, a policy enforcement module, and meanwhile, invalidates the original control policy. The gateway device unit performs precise control on the data flow of the subscriber service according to the received new final control policy. The new final control policy includes QoS control, bandwidth control, and gating control including approval or denial of the subscriber service.

In an actual application, before receiving the control policy of the data flow of the subscriber service, where the policy is sent by the charging function unit, the foregoing policy comprehensive processing unit may generate a control policy of the data flow of the subscriber service according to decision input information such as its own configuration, the information reported by the gateway device, subscription related information, and information from the application layer, and deliver and install it to the gateway device for enforcement.

Persons of ordinary skill in the art may understand that, all or part of the processes in the methods according to the foregoing embodiments may be implemented by a program instructing relevant hardware. The program may be stored in a computer-readable storage medium. When the program is executed, the process of the methods according to the embodiments is included. The storage medium may be a magnetic disk, a compact disk, a read-only memory (Read-Only Memory, ROM), a random access memory (Random Access Memory, RAM), and the like.

To sum up, in the present invention, the charging system participates in the policy decision, and rich dynamic information in the charging system is used to control the data flow of the subscriber service, for example, based on an accumulation of the consumption amount, an accumulation of consumed traffic, an account expiry date, an account type, a changing account balance, and so on, the precise control of the data flow of the subscriber service is implemented to increase a utilization rate and a yield rate of network resources of the operator, and meanwhile management and control of consumption behaviors of the subscriber are realized, thereby improving user experience and increasing user loyalty.

According to the solutions, the policy generating unit and the charging function unit cooperate to perform the collection of the charging related information based on the subscriber service and the policy generation. In the solutions, the charging function unit takes the initiative, and may initiate a session with the policy generating unit according to an information collection situation, so as to reduce a lot of useless sessions that are generated when the policy generating unit actively initiates the sessions, because the policy generating unit cannot predict when the charging information can satisfy the information collection rule, and an interactive session still needs to be established even in the case that the information collection rule is not satisfied, thereby reducing a burden of the policy generating unit for establishing and maintaining the session. Meanwhile, in the solutions, the gateway device does not need to participate in the information collection, so that the cost and performance of the gateway device are not affected, and a burden of information exchange between the gateway device and the policy generating unit is not increased.

The foregoing descriptions are merely exemplary specific implementation manners of the present invention, but the protection scope of the present invention is not limited here. Any change or replacement that can be easily thought of by persons skilled in the art within the technical scope of the present invention shall fall within the protection scope of the present invention. Therefore, the protection scope of the present invention is subject to the protection scope of the claims.

## Claims

1. A method for controlling a data flow of a subscriber service, comprising:
performing, by a policy generating unit, a policy decision according to its own configuration, information reported by a gateway device, subscription related information or information from an application layer, generating a service flow control rule, a charging control rule and an information collection rule of a subscriber, and combining the service flow control rule, the charging control rule and the information collection rule of a subscriber into a policy control rule;
installing, by the policy generating unit, the policy control rule to a charging trigger unit;
after successfully installing the policy control rule, the charging trigger unit extracting the information collection rule, adding the information collection rule to a corresponding charging request, and sending the charging request, wherein the charging trigger unit is the gateway device;
receiving (21), by a charging function unit, the charging request sent by the charging trigger unit, obtaining the information collection rule carried in the charging request, determining the information collection rule related to the charging request or a charging session corresponding to the charging request, wherein the charging function unit is an Online Charging System, OCS;
collecting (22), by the charging function unit, charging related information of the subscriber service according to the information collection rule;
upon detecting that a charging related information value of the subscriber service reaches a quota or a limit stipulated by the information collection rule, sending (23), by the charging function unit, a collection result of the charging related information to the policy generating unit, generating (24), by the policy generating unit, a control policy of a data flow of the subscriber service according to the charging related information;
installing (25), by the policy generating unit, the control policy to the gateway device; and
controlling, by the gateway device, the data flow of the subscriber service according to the control policy.

2. The method for controlling a data flow of a subscriber service according to claim 1, wherein the sending the collection result of the charging related information of the subscriber service to the policy generating unit comprises:
initiating, by the charging function unit, a session request to establish a session with the policy generating unit, and sending the collection result of the charging related information of the subscriber service to the policy generating unit in the session.

3. The method for controlling a data flow of a subscriber service according to claim 1, wherein the collection result of the charging related information of the subscriber service comprises: an event, or a rule identifier, or pairing information of a collection item and a collection value.

4. The method for controlling a data flow of a subscriber service according to any one of claims 1 to 3, wherein the sending, by the charging function unit, the collection result of the charging related information to the policy generating unit, generating, by the policy generating unit, the control policy of the data flow of the subscriber service according to the charging related information specifically comprises:
upon detecting that a charging related information value of the subscriber service reaches a quota or a limit stipulated by the information collection rule, sending, by the charging function unit, the collection result to the policy generating unit, and when there is no policy control rule that can be associated with the collection result, the policy generating unit saving the collection result; or
upon detecting that the charging related information value of the subscriber service reaches the quota or the limit stipulated by the information collection rule, sending, by the charging function unit, the collection result to the policy generating unit, and when there is no policy control rule that can be associated with the collection result, the policy generating unit returning processing failure information to the charging function unit.

5. A system for controlling a data flow of a subscriber service, comprising:
a policy generating unit (12), configured to perform a policy decision according to its own configuration, information reported by a gateway device, subscription related information or information from an application layer; generate a service flow control rule, a charging control rule and an information collection rule of a subscriber; combine the service flow control rule, the charging control rule and the information collection rule of a subscriber into a policy control rule; install the policy control rule to a charging trigger unit;
the charging trigger unit (13), configured to after successfully installing the policy control rule, extract the information collection rule, add the information collection rule to a corresponding charging request, and send the charging request, wherein the charging trigger unit is the gateway device;
a charging function unit (11), configured to receive the charging request sent by the charging trigger unit, obtain the information collection rule carried in the charging request, determine the information collection rule related to the charging request or a charging session corresponding to the charging request; collect charging related information of the subscriber service according to the information collection rule; detect that a charging related information value of the subscriber service reaches a quota or a limit stipulated by the information collection rule and send a collection result of the charging related information to the policy generating unit; the policy generating unit configured to generate a control policy of a data flow of the subscriber service according to the charging related information and install the control policy to the gateway device, the gateway device configured to control the data flow of the subscriber service according to the control policy, wherein the charging function unit is an Online Charging System, OCS.

6. The system for controlling a data flow of a subscriber service according to claim 5, the charging function unit, further configured to:
initiate a session request to establish a session with the policy generating unit, and send the collection result of the charging related information of the subscriber service to the policy generating unit in the session.

7. The system for controlling a data flow of a subscriber service according to claim 5, the charging function unit further configured to detect that a charging related information value of the subscriber service reaches a quota or a limit stipulated by the information collection rule and send the collection result to the policy generating unit, and the policy generating unit further configured to save the collection result when there is no policy control rule that can be associated with the collection result; or
the charging function unit further configured to detect that the charging related information value of the subscriber service reaches the quota or the limit stipulated by the information collection rule and send the collection result to the policy generating unit, and the policy generating unit further configured to return processing failure information to the charging function unit when there is no policy control rule that can be associated with the collection result.

## Patentansprüche

1. Verfahren zum Steuern eines Datenflusses in einem Teilnehmerdienst, umfassend:
Ausführen einer Policy-Entscheidung gemäß ihrer eigenen Konfiguration, einer von einer Gateway-Vorrichtung berichteten Information, einer auf eine Teilnehmeranmeldung bezogenen Information oder einer Information von einer Anwendungsschicht durch eine Policy-Erzeugungseinheit, Erzeugen einer Steuerregel für einen Dienstfluss, einer Vergebührungssteuerregel und einer Informationserfassungsregel eines Teilnehmers, und Kombinieren der Steuerregel für einen Dienstfluss, der Vergebührungssteuerregel und der Informationserfassungsregel eines Teilnehmers in einer Policy-Steuerregel;
Installieren der Policy-Steuerregel durch die Policy-Erzeugungseinheit in einer Vergebührungsauslöseeinheit;
nach dem erfolgreichen Installieren der Policy-Steuerregel, Extrahieren der Informationserfassungsregel durch die Vergebührungsauslöseeinheit, Hinzufügen der Informationserfassungsregel zu einer entsprechenden Vergebührungsanfrage und
Senden der Vergebührungsanfrage, wobei die Vergebührungsauslöseeinheit die Gateway-Vorrichtung ist;
Empfangen (21) der von der Vergebührungsauslöseeinheit gesendeten Vergebührungsanfrage durch eine Vergebührungsfunktionseinheit, Erhalten der in der Vergebührungsanfrage mitgeführten Informationserfassungsregel, Ermitteln der auf die Vergebührungsanfrage bezogenen Informationserfassungsregel oder einer Vergebührungssitzung, die der Vergebührungsanfrage entspricht, wobei die Vergebührungsfunktionseinheit ein Online-Vergebührungssystem (Online Charging System, OCS) ist;
Erfassen (22) der auf die Vergebührung bezogenen Information des Teilnehmerdienstes durch die Vergebührungsfunktionseinheit gemäß der Informationserfassungsregel;
sobald erkannt wurde, dass ein auf die Vergebührung bezogener Informationswert des Teilnehmerdienstes eine Quote oder eine Grenze erreicht, die durch die Informationserfassungsregel festgesetzt wurde, Senden (23) eines Erfassungsergebnisses der auf die Vergebührung bezogenen Information durch die Vergebührungsfunktionseinheit an die Policy-Erzeugungseinheit; und Erzeugen (24) einer Steuer-Policy eines Datenflusses des Teilnehmerdienstes durch die Policy-Erzeugungseinheit gemäß der auf die Vergebührung bezogenen Information;
Installieren (25) der Steuer-Policy durch die Policy-Erzeugungseinheit in der Gateway-Vorrichtung; und
Steuern des Datenflusses des Teilnehmerdienstes durch die Gateway-Vorrichtung gemäß der Steuer-Policy.

2. Verfahren zum Steuern eines Datenflusses in einem Teilnehmerdienst nach Anspruch 1, wobei das Senden des Erfassungsergebnisses der auf die Vergebührung bezogenen Information des Teilnehmerdienstes an die Policy-Erzeugungseinheit umfasst:
Einleiten einer Sitzungsanfrage durch die Vergebührungsfunktionseinheit, um eine Sitzung mit der Policy-Erzeugungseinheit einzurichten, und Senden des Erfassungsergebnisses der auf die Vergebührung bezogenen Information des Teilnehmerdienstes während der Sitzung an die Policy-Erzeugungseinheit.

3. Verfahren zum Steuern eines Datenflusses in einem Teilnehmerdienst nach Anspruch 1, wobei das Erfassungsergebnis der auf die Vergebührung bezogenen Information des Teilnehmerdienstes ein Ereignis oder eine Regelkennung oder eine Anbindungsinformation von einem Erfassungselement und einem Erfassungswert umfasst.

4. Verfahren zum Steuern eines Datenflusses in einem Teilnehmerdienst nach einem der Ansprüche 1 bis 3, wobei das Senden des Erfassungsergebnisses der auf die Vergebührung bezogenen Information durch die Vergebührungsfunktionseinheit an die Policy-Erzeugungseinheit und das Erzeugen der Steuer-Policy des Datenflusses des Teilnehmerdienstes durch die Policy-Erzeugungseinheit gemäß der auf die Vergebührung bezogenen Information insbesondere umfassen:
sobald erkannt wurde, dass ein auf die Vergebührung bezogener Informationswert des Teilnehmerdienstes eine Quote oder eine Grenze erreicht, die durch die Informationserfassungsregel festgesetzt wurde, Senden des Erfassungsergebnisses durch die Vergebührungsfunktionseinheit an die Policy-Erzeugungseinheit, und
wobei die Policy-Erzeugungseinheit das Erfassungsergebnis speichert, wenn keine Policy-Steuerregel vorhanden ist, die dem Erfassungsergebnis zugehörig ist; oder
sobald erkannt wurde, dass der auf die Vergebührung bezogene Informationswert des Teilnehmerdienstes die Quote oder die Grenze erreicht, die durch die Informationserfassungsregel festgesetzt wurde, Senden des Erfassungsergebnisses durch die Vergebührungsfunktionseinheit an die Policy-Erzeugungseinheit, und
wobei die Policy-Erzeugungseinheit eine Verarbeitungsfehlerinformation an die Vergebührungsfunktionseinheit zurücksendet, wenn keine Policy-Steuerregel vorhanden ist, die dem Erfassungsergebnis zugehörig ist.

5. System zum Steuern eines Datenflusses in einem Teilnehmerdienst, umfassend:
eine Policy-Erzeugungseinheit (12) die konfiguriert ist, eine Policy-Entscheidung
gemäß ihrer eigenen Konfiguration, einer von einer Gateway-Vorrichtung berichteten Information, einer auf eine Teilnehmeranmeldung bezogenen Information oder einer Information von einer Anwendungsschicht auszuführen, eine Steuerregel für einen Dienstfluss, eine Vergebührungssteuerregel und eine Informationserfassungsregel eines Teilnehmers zu erzeugen, die Steuerregel für einen Dienstfluss, die Vergebührungssteuerregel und die Informationserfassungsregel eines Teilnehmers in einer Policy-Steuerregel zu kombinieren, und die Policy-Steuerregel in einer Vergebührungsauslöseeinheit zu installieren;
wobei die Vergebührungsauslöseeinheit (13) konfiguriert ist, nach dem erfolgreichen Installieren der Policy-Steuerregel die Informationserfassungsregel zu extrahieren,
die Informationserfassungsregel zu einer entsprechenden Vergebührungsanfrage hinzuzufügen und die Vergebührungsanfrage zu senden, wobei die Vergebührungsauslöseeinheit die Gateway-Vorrichtung ist;
eine Vergebührungsfunktionseinheit (11), die konfiguriert ist, die von der Vergebührungsauslöseeinheit gesendete Vergebührungsanfrage zu empfangen; die in der Vergebührungsanfrage mitgeführte Informationserfassungsregel zu erhalten; die auf die Vergebührungsanfrage bezogene Informationserfassungsregel oder eine Vergebührungssitzung, die der Vergebührungsanfrage entspricht zu ermitteln, die auf die Vergebührung bezogene Information des Teilnehmerdienstes gemäß der Informationserfassungsregel zu erfassen; zu erkennen, dass ein auf die Vergebührung bezogener Informationswert des Teilnehmerdienstes eine Quote oder eine Grenze erreicht, die durch die Informationserfassungsregel festgesetzt wurde; und ein Erfassungsergebnis der auf die Vergebührung bezogenen Information an die Policy-Erzeugungseinheit zu senden; wobei die Policy-Erzeugungseinheit konfiguriert ist,
eine Steuer-Policy eines Datenflusses des Teilnehmerdienstes gemäß der auf die Vergebührung bezogenen Information zu erzeugen und die Steuer-Policy in der Gateway-Vorrichtung zu installieren; wobei die Gateway-Vorrichtung konfiguriert ist, den Datenfluss des Teilnehmerdienstes gemäß der Steuer-Policy zu steuern,
wobei die Vergebührungsfunktionseinheit ein Online-Vergebührungssystem (Online Charging System, OCS) ist.

6. System zum Steuern eines Datenflusses in einem Teilnehmerdienst nach Anspruch 5, wobei die Vergebührungsfunktionseinheit außerdem konfiguriert ist zum:
Starten einer Sitzungsanfrage, um eine Sitzung mit der Policy-Erzeugungseinheit einzurichten, und das Erfassungsergebnis der auf die Vergebührung bezogenen Information des Teilnehmerdienstes während der Sitzung an die Policy-Erzeugungseinheit zu senden.

7. System zum Steuern eines Datenflusses in einem Teilnehmerdienst nach Anspruch 5, wobei die Vergebührungsfunktionseinheit außerdem konfiguriert ist, um zu erkennen, dass ein auf die Vergebührung bezogener Informationswert des Teilnehmerdienstes eine Quote oder eine Grenze erreicht, die durch die Informationserfassungsregel festgesetzt wurde, und das Erfassungsergebnis an die Policy-Erzeugungseinheit zu senden, und wobei die Policy-Erzeugungseinheit außerdem konfiguriert ist, das Erfassungsergebnis zu speichern, wenn keine Policy-Steuerregel vorhanden ist, die dem Erfassungsergebnis zugeordnet werden kann;
oder
wobei die Vergebührungsfunktionseinheit außerdem konfiguriert ist, zu erkennen, dass ein auf die Vergebührung bezogener Informationswert des Teilnehmerdienstes die Quote oder die Grenze erreicht, die durch die Informationserfassungsregel festgesetzt wurde, und das Erfassungsergebnis an die Policy-Erzeugungseinheit zu senden, und wobei die Policy-Erzeugungseinheit außerdem konfiguriert ist, eine Verarbeitungsfehlerinformation an die Vergebührungsfunktionseinheit zurückzusenden, wenn keine Policy-Steuerregel vorhanden ist, die dem Erfassungsergebnis zugeordnet werden kann.

## Revendications

1. Procédé pour contrôler un flux de données d'un service d'abonné, comprenant les étapes suivantes :
exécuter, par une unité de génération de politique, une décision de politique conformément à sa propre configuration, à des informations rapportées par un dispositif passerelle, à des informations relatives à l'abonnement ou à des informations provenant d'une couche d'application, générer une règle de contrôle de flux de service, une règle de contrôle de facturation et une règle de collecte d'informations d'un abonné, et combiner la règle de contrôle de flux de service, la règle de contrôle de facturation et la règle de collecte d'informations d'un abonné en une règle de contrôle de politique ;
installer, par l'unité de génération de politique, la règle de contrôle de politique sur une unité de déclenchement de facturation ;
après avoir installé avec succès la règle de contrôle de politique, l'unité de déclenchement de facturation extrayant la règle de collecte d'informations, ajouter la règle de collecte d'informations à une demande de facturation correspondante, et
envoyer la demande de facturation, où l'unité de déclenchement de facturation est le dispositif passerelle ;
recevoir (21), par une unité de fonction de facturation, la demande de facturation envoyée par l'unité de déclenchement de facturation, obtenir la règle de collecte d'informations acheminée dans la demande de facturation, déterminer la règle de collecte d'informations relative à la demande de facturation ou à une session de facturation correspondant à la demande de facturation, où l'unité de fonction de facturation est un système de facturation en ligne, OCS ;
collecter (22), par l'unité de fonction de facturation, des informations relatives à la facturation du service d'abonné conformément à la règle de collecte d'informations ;
lorsqu'il est détecté qu'une valeur d'informations relatives à la facturation du service d'abonné a atteint un quota ou une limite stipulée par la règle de collecte d'informations, envoyer (23), par l'unité de fonction de facturation, un résultat de collecte des informations relatives à la facturation à l'unité de génération de politique, générer (24), par l'unité de génération de politique, une politique de contrôle d'un flux de données du service d'abonné conformément aux informations relatives à la facturation ;
installer (25), par l'unité de génération de politique, la politique de contrôle sur le dispositif passerelle ; et
contrôler, par le dispositif passerelle, le flux de données du service d'abonné conformément à la politique de contrôle.

2. Procédé pour contrôler un flux de données d'un service d'abonné selon la revendication 1, dans lequel l'envoi du résultat de collecte des informations relatives à la facturation du service d'abonné à l'unité de génération de politique comprend les étapes suivantes :
initier, par l'unité de fonction de facturation, une demande de session pour établir une session avec l'unité de génération de politique, et envoyer le résultat de collecte des informations relatives à la facturation du service d'abonné à l'unité de génération de politique dans la session.

3. Procédé pour contrôler un flux de données d'un service d'abonné selon la revendication 1, dans lequel le résultat de collecte des informations relatives à la facturation du service d'abonné comprend : un événement, ou un identifiant de règle, ou des informations d'appariement d'un élément de collecte et d'une valeur de collecte.

4. Procédé pour contrôler un flux de données d'un service d'abonné selon l'une quelconque des revendications 1 à 3, dans lequel l'envoi, par l'unité de fonction de facturation, du résultat de collecte des informations relatives à la facturation à l'unité de génération de politique, et la génération, par l'unité de génération de politique, de la politique de contrôle du flux de données du service d'abonné conformément aux informations relatives à la facturation, comprennent les étapes suivantes :
lorsqu'il est détecté qu'une valeur d'informations relatives à la facturation du service d'abonné a atteint un quota ou une limite stipulés par la règle de collecte d'informations, envoyer, par l'unité de fonction de facturation, le résultat de collecte à l'unité de génération de politique, et lorsqu'aucune règle de contrôle de politique ne peut être associée au résultat de collecte, l'unité de génération de politique sauvegarde le résultat de collecte ; ou
lorsqu'il est détecté qu'une valeur d'informations relatives à la facturation du service d'abonné a atteint le quota ou la limite stipulés par la règle de collecte d'informations, envoyer, par l'unité de fonction de facturation, le résultat de collecte à l'unité de génération de politique, et lorsqu'aucune règle de contrôle de politique ne peut être associée au résultat de collecte, l'unité de génération de politique renvoie des informations de défaillance de traitement à l'unité de fonction de facturation.

5. Système pour contrôler un flux de données d'un service d'abonné, comprenant :
une unité de génération de politique (12), configurée pour exécuter une décision de politique conformément à sa propre configuration, à des informations rapportées par un dispositif passerelle, à des informations relatives à l'abonnement ou à des informations provenant d'une couche d'application ; pour générer une règle de contrôle de flux de service, une règle de contrôle de facturation et une règle de collecte d'informations d'un abonné ; pour combiner la règle de contrôle de flux de service, la règle de contrôle de facturation et la règle de collecte d'informations d'un abonné en une règle de contrôle de politique ; pour installer la règle de contrôle de politique sur une unité de déclenchement de facturation ;
l'unité de déclenchement de facturation (13), configurée pour, après avoir installé avec succès la règle de contrôle de politique, extraire la règle de collecte d'informations, pour ajouter la règle de collecte d'informations à une demande de facturation correspondante, et pour envoyer la demande de facturation, où l'unité de déclenchement de facturation correspond au dispositif passerelle ;
une unité de fonction de facturation (11), configurée pour recevoir la demande de facturation envoyée par l'unité de déclenchement de facturation, pour obtenir la règle de collecte d'informations acheminée dans la demande de facturation, pour déterminer la règle de collecte d'informations relatives à la demande de facturation ou une session de facturation correspondant à la demande de facturation ; pour collecter des informations relatives à la facturation du service d'abonné conformément à la règle de collecte d'informations ; pour détecter qu'une valeur d'informations relatives à la facturation du service d'abonné atteint un quota ou une limite stipulé par la règle de collecte d'informations et pour envoyer un résultat de collecte des informations relatives à la facturation à l'unité de génération de politique ; l'unité de génération de politique étant configurée pour générer une politique de contrôle d'un flux de données du service d'abonné conformément aux informations relatives à la facturation et pour installer la politique de contrôle sur le dispositif passerelle, le dispositif passerelle étant configuré pour contrôler le flux de données du service d'abonné conformément à la politique de contrôle, où l'unité de fonction de facturation est un système de facturation en ligne, OCS.

6. Système pour contrôler un flux de données d'un service d'abonné selon la revendication 5, l'unité de fonction de facturation étant en outre configurée pour :
initier une demande de session pour établir une session avec l'unité de génération de politique, et envoyer le résultat de collecte des informations relatives à la facturation du service d'abonné à l'unité de génération de politique dans la session.

7. Système pour contrôler un flux de données d'un service d'abonné selon la revendication 5, l'unité de fonction de facturation étant en outre configurée pour détecter qu'une valeur d'informations relatives à la facturation du service d'abonné a atteint un quota ou une limite stipulé par la règle de collecte d'informations et envoyer le résultat de collecte à l'unité de génération de politique, et l'unité de génération de politique est en outre configurée pour sauvegarder le résultat de collecte lorsqu'aucune règle de contrôle de politique ne peut être associée au résultat de collecte ; ou
l'unité de fonction de facturation étant en outre configurée pour détecter qu'une valeur d'informations relatives à la facturation du service d'abonné a atteint le quota ou la limite stipulé par la règle de collecte d'informations, envoyer le résultat de collecte à l'unité de génération de politique, et l'unité de génération de politique est en outre configurée pour retourner des informations de défaillance de traitement à l'unité de fonction de facturation lorsqu'aucune règle de contrôle de politique ne peut être associée au résultat de collecte.
